# EUROPEAN PATENT APPLICATION

(11) **EP 4 841 105 A1**
(43) Date of publication of application: **18.11.2026**
(21) Application number: 26178445.8
(22) Date of filing: 13.05.2026
(51) Int. Cl.: F03G 6/00, H02S 10/30, H02S 20/30

(54) **DEVICE FOR THE GENERATION OF ELECTRICAL ENERGY FROM SOLAR RADIATION USING HIGH HEAT CAPACITY MATERIAL**

(30) Priority: 14.05.2025 DE 102025118601
(71) Applicant: AMO GmbH, 52074 Aachen (DE)
(72) Inventor: WANG, Zhenxing, 52134 Herzogenrath (DE); LEMME, Max Christian, 51069 Köln (DE); GINZBURG, Abraham, 52062 Aachen (DE); HEMMETTER, Andreas, 52062 Aachen (DE); YOSEF, Yuvar Bar, 6314917 Tel Aviv (IL)
(74) Representative: Patentanwälte Bauer Vorberg Kayser

(57) **Abstract**

Device (10) for the generation of electrical energy from solar radiation (24), wherein the device (10) comprises a high heat capacity layer (14) with high heat capacity material, wherein the high heat capacity material is heated by the solar radiation (24) and emits electromagnetic radiation (26) and wherein the device (10) comprises an energy conversion unit (18) capable of converting the electromagnetic radiation (26) of the high heat capacity material into electrical energy.

## Description

The present teachings relate to a device for the generation of electrical energy from solar (electromagnetic) radiation according to claim 1. The present teachings further relate to a power plant according to claim 10.

In order to avoid the usage of fossil energy and to reduce the emission of carbon dioxide, several approaches to generate energy out of renewable technologies are known.

Various approaches are based on the use of solar radiation. Converting sun energy to electricity is mostly done by exploiting the photovoltaic effect. Silicon-based solar cells, which are the most common type of solar cells, however, they have a theoretical efficiency of maximum 33%, while the practical commercial efficiency is 14-20%. Using other materials of multilayer photovoltaic cells makes this technology very expensive.

Another challenge is that the generation of electricity by solar cells faces the need for a power storage to ensure continuity of electricity supply e.g. during night-time or time periods with less sunlight due to cloudy weather. Therefore, power storages are connected to solar cells to store energy in periods with high intensity solar radiation. The power storages these days are usually not environmentally friendly and require a lot of chemical devices, electronics and they are complex.

Another method of converting solar radiation into electrical energy is the so-called Concentrated Solar Power Molten Salt System (CSPMSS). In this system many mirrors are directed to a tower to melt salt in a pipe (to a temperature of approximately 830K ~ 560 °C). The salt is pumped down into a hot tank and from there it flows into another water tank generating steam which rotates a generator to produce electricity. Because of the high heat capacity of the salt and the isolation of the hot salt tank the temperature drop during night-time is only about 10°C. CSPMSS are huge and consume a large area for the concentrating lenses. They are inefficient and very expensive.

It is therefore the underlying object of the present application to provide a device for generating electrical energy from solar radiation, which allows for basically permanent energy supply and works also on a small scale.

The object is being solved by the features of the independent claims. Further embodiments and practical advantages are explained in connection with the dependent claims.

A device for the generation of electrical energy from solar radiation is proposed. The device comprises a high heat capacity layer with high heat capacity material. The high heat capacity material is heatable by solar radiation and emits electromagnetic radiation in the IR region, when it is in a heated state. As will be explained in further detail below, a high heat capacity material has a specific heat capacity of at least 2 J/(Kg*K) and is capable of storing heat over a long period of time and emits electromagnetic radiation continuously. The high heat capacity material does not suffer from a steep temperature drop. The general concept of emission of thermal radiation is known from black-body radiation, wherein a black body emits a particular continuous spectrum of electromagnetic radiation that depends on the body's temperature. In practice, the solar radiation is directed directly or indirectly to the high heat capacity material and causes the high heat capacity material to heat up.

Further, the device comprises an energy conversion unit capable of converting the thermal radiation of the high heat capacity into electrical energy. As explained in detail below, such an energy conversion unit can be a rectenna (antenna attached to rectifier).

The device is capable of converting solar radiation into electrical energy via an energy storage in the form of a high heat capacity material. The high heat capacity material works as a storage, which absorbs the energy of the solar radiation and stores it for a long period of time, also during hours where no sunlight radiation is present. The storage in particular can cover time spans of several hours. After being heated up, the high heat capacity material emits electromagnetic radiation and the conversion of the thermal radiation from the high heat capacity material can be performed with high efficiency with the energy conversion unit.

Furthermore, the high heat capacity layer and also the energy conversion unit are scalable in terms of their size.

In one embodiment, the high heat capacity material comprises salt, (grinded) rock and/or concrete. The high heat capacity material can be solid or liquid. These materials have a high specific heat capacity and can store the heat generated by the solar radiation for at least some hours or even days. Salt can be heated up to 830 K, which corresponds to approximately 556 °C. Furthermore, these materials are environmentally friendly and cheap.

In order to achieve a good heat distribution in the high heat capacity material, the high heat capacity layer is at least partially and in particular entirely surrounded by a thermally conducting layer comprising thermally conducting material. In particular, the thermally conducting material has a thermal conductivity of at least 200 W/(mK)s. This thermal conduction material can be a metal with a high thermal conductivity, such as e.g. copper. When the solar radiation is directed to the thermally conducting material, this also heats up and the heat is distributed around the high heat capacity material to heat this up efficiently and in particular over the entire surface of the high heat capacity material.

In a further non-limiting embodiment, the energy conversion unit comprises a rectenna layer. The rectenna layer comprises one or more rectennas or consists of one or more rectennas. A rectenna - which is a combination of the words *rectifier* and *antenna* - is a circuit arrangement that receives electromagnetic waves - here the EM waves that the hot body is emitting - and then converts them into a DC voltage. The antenna acts as a transducer that converts the incoming EM waves of the hot body into an AC electrical signal. The rectifying circuit, which consists of a single or multiple rectifiers and optionally matching and/or filter circuits, converts the AC power into DC power. A simple rectenna element typically consists of a dipole antenna with a diode connected across the dipole elements. The antenna part of the rectenna can vary in design, including dipole antennas, patch antennas, and more complex structures. The rectenna is scalable and can be modified in order to convert different EM wavelengths emitted from different hot bodies temperatures.

The rectenna layer is in particular arranged in direct contact with the high heat capacity layer or the thermally conducting layer. In particular, the energy conversion unit is arranged at least partially surrounding the high heat capacity layer or the thermally conducting layer.

As an alternative or additionally to a rectenna, an infrared photovoltaic cell can be used as an energy conversion unit.

In particular, the high heat capacity material emits thermal radiation of a wavelength between 2 µm and 6 µm, with a peak between 2.5 µm and 4.5 µm. The high heat capacity material preferably emits a broad thermal radiation spectrum, with a maximum around 3.5 µm. In this case, the rectenna is designed to 3.5 µm wavelength
In another non-limiting embodiment, the device comprises a thermally isolating layer comprising isolating material to isolate the high heat capacity material. The isolation around the heat capacity material reduces heat losses to the ambient and thus increase the storage time in which electrical energy can be generated while no solar radiation is available, the high heat capacity material is at least partially surrounded by the isolating material. The isolating material can be a gas, porous materials, aerogel, polymer, vacuum, or other material with low heat conductivity.

Further, the device can comprise a housing. The housing can comprise several layers, for example as an inner layer the isolating layer, which is directed to the high heat capacity material and an outer layer, which serves as a protection for the device.

The housing and in particular also the isolating layer and/or the rectenna layer may comprise an opening wherein the solar radiation can penetrate the housing and in particular the isolating layer and/or rectenna layer to directly heat the high heat capacity material or the thermically conducting material. The opening can be of different shape or dimension. The opening can be a circular opening or a rectangular opening or series of openings. The opening may extend over part of the surface, over a stripe extending from one end to another end of the surface of the device or may even extend over the entire surface.

In another non-limiting embodiment, the device comprises a Fresnel lens to focus the solar radiation enabling heating up the thermally conductive material to high temperatures. The Fresnel lens may be arranged on top of the surface of the device designed to be directed to the sun, either directly contacting the surface or in distance to the surface. The solar radiation is in particular concentrated towards the opening of the housing where the solar radiation then can be effectively converted into heat.

Also other focusing means are possible.

To best exploit the solar radiation during the whole daytime, the device may comprise a steering unit. The steering unit may be connected to the housing and configured to move the device with respect to the position of the sun. Additionally or alternatively, the steering unit is only connected to part of the housing, as for example the Fresnel lens, and the lens is moved with respect to the device and the sun.

The steering unit may be supplied with electrical energy generated by the device itself.

The invention also relates to a power plant, and/ or hot surfaces of production plants, wherein the power plant comprises several connected devices according to the above-described devices.

In the following further embodiments and advantages are explained in connection with the figures. The figures show in
- Fig. 1: a schematic drawing of a device according to a first embodiment in cross section,
- Fig. 2: a schematic drawing of a device according to Fig. 1 in a perspective view on the surface,
- Fig. 3: a schematic drawing of a device according to a second embodiment in a perspective view on the surface,
- Fig. 4: a schematic drawing of a device according to a third embodiment in a perspective view on the surface and
- Fig. 5: a schematic drawing of a device according to a fourth embodiment in a perspective view on the surface.

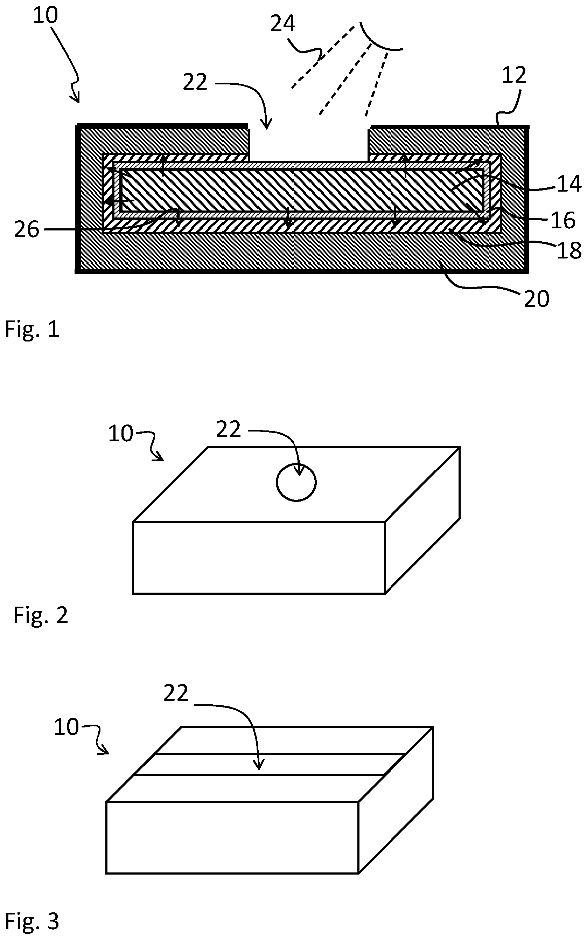

Fig. 1 depicts a device 10 to generate electrical energy from solar radiation 24.

The device 10 comprises a housing 12, wherein inside the housing 12 a high heat capacity layer 14 comprising high heat capacity material is arranged. The high heat capacity material here is salt. Surrounding the high heat capacity layer 14, a thermally conducting layer 16 comprising thermally conducting material is arranged. The thermally conducting layer 16 is made of metal, e.g. copper.

Surrounding the high heat capacity layer 14 and directly adjacent to the thermally conducting layer 16 an energy conversion unit 18 in the form of a rectenna layer is arranged.

The high heat capacity layer 14 and the thermally conducting layer 16 and the energy conversion unit 18 are further surrounded by an isolating layer 20 and as an outermost layer the housing 12.

The isolating layer 20 and the housing comprise an opening 22 at the surface.

In the following the working mode of the device 10 is explained. When solar radiation 24 hits the device, the solar radiation 24 can penetrate through the housing 12 and thermally isolating layer 20 through the opening 22. The solar radiation 24 then heats up the thermally conducting material of the thermally conducting layer 16. The thermally conducting material spreads the heat over its entire volume and thereby effectively heats up the high heat capacity material of the high heat capacity layer 14.

In a heated-up state, the high heat capacity material emits electromagnetic (EM) radiation 26, which is received by the energy conversion unit 18. Due to the thermal isolating layer 20 surrounding the high heat capacity layer 14 and the energy conversion unit 18, the heat is mainly dissipated in the energy conversion unit 18.

The energy conversion unit 18 then transforms the electromagnetic thermal radiation 26 into electrical energy.

In Fig. 2 and 3 the first and a second embodiment of a device 10 are shown, wherein the opening 22 has a different geometry. In Fig. 2 the opening 22 has a circular geometry and is rather small compared to the overall surface of the device 10. In Fig. 3 the opening has a stripe-like geometry and extends from one side to another side of the entire surface of the device 10.

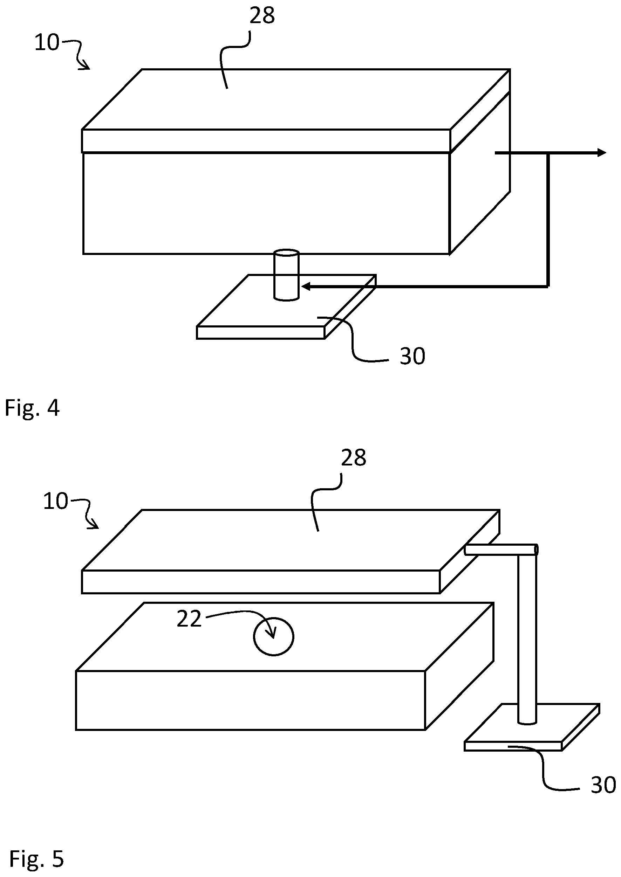

Fig. 4 and 5 show further embodiments of a device 10, which both comprise a Frensel lens 28 and a steering unit 30.

A third embodiment of the device 10 shown in Fig. 4 has a Fresnel lens 28 which is directly adjacent and in contact to the upper surface of the housing 12. The Fresnel lens 28 is configured to focus solar radiation 24 to the area of the opening (not visible here).

Further, the device 10 is connected to a steering unit 30, which is configured to move the entire device 10 according to the position of the sun. As further shown in Fig. 4, the electrical energy generated by the device is partly used to power the steering unit 30.

The fourth embodiment of the device 10 shown in Fig. 5 also comprises a Fresnel lens 28, which is spaced apart from the surface of the housing 12. The Fresnel lens 28 is here connected to the steering unit 30 and the steering unit 30 is configured to move the Frensel lens 28 with respect to the position of the sun and the rest of the device 10.

### Reference signs

- 10: device
- 12: housing
- 14: high heat capacity layer
- 16: thermally conducting layer
- 18: energy conversion unit
- 20: isolating layer
- 22: opening
- 24: solar radiation
- 26: thermal radiation
- 28: Fresnel lens
- 30: steering unit

## Claims

1. Device for the generation of electrical energy from solar radiation (24), wherein the device (10) comprises a high heat capacity layer (14) with high heat capacity material, wherein the high heat capacity material is heatable by the solar radiation (24) and emits in a heated state electromagnetic radiation (26) and wherein the device (10) comprises an electromagnetic radiation conversion unit (18) capable of converting the electromagnetic radiation (26) of the high heat capacity material into electrical energy.

2. Device according to the preceding claim,
wherein the high heat capacity material comprises salt, rock and/or concrete.

3. Device according to any of the preceding claims,
wherein the high heat capacity layer (14) is surrounded by a thermally conducting layer (16) comprising thermally conducting material.

4. Device according to any of the preceding claims,
wherein the energy conversion unit (18) comprises a rectenna layer.

5. Device according to any of the preceding claims,
wherein the high heat capacity material emits thermal radiation (26) of a wavelength between 2 µm and 6 µm, and in particular between 2.5 and 4.5 µm.

6. Device according to any of the preceding claims,
wherein the device (10) comprises an isolating layer (20) comprising isolating material to isolate the high heat capacity material.

7. Device according to any of the preceding claims,
wherein the device (10) comprises a housing (12) and wherein the housing (12) comprises an opening (22), such that the solar radiation (24) can penetrate the housing (12) to heat the high heat capacity material.

8. Device according to any of the preceding claims,
wherein the device (10) comprises a Fresnel lens (28) to focus the solar radiation (24).

9. Device according to any of the preceding claims,
wherein the device (10) comprises a steering unit (30) configured to move the device (10) or at least part of the device (10).

10. Power plant, comprising several connected devices (10) according to the preceding claims 1 to 9.
